# EUROPEAN PATENT SPECIFICATION

(11) **EP 3 363 298 B1**
(45) Date of publication and mention of the grant of the patent: **11.11.2026**
(21) Application number: 18159150.4
(22) Date of filing: 16.01.2012
(51) Int. Cl.: A23B 2/80, A23B 2/82, A23B 2/88, A23B 7/04, A23B 7/045, A23B 4/07, A23B 4/06

(54) **A METHOD FOR FREEZING FOOD PRODUCTS**
VERFAHREN ZUM GEFRIEREN VON LEBENSMITTELPRODUKTEN
PROCÉDÉ DE CONGÉLATION DE PRODUITS ALIMENTAIRES

(43) Date of publication of application: 22.08.2018
(62) Document number(s) of the earlier application(s) in accordance with Art. 76 EPC: 12151243.8 / 2 614 729
(73) Proprietor: Coolnova AS, 9007 Tromsø (NO)
(72) Inventor: Trondsen, Torbjörn, N-9007 Tromsö (NO)
(74) Representative: Brantsandpatents bv

(56) References cited:
- DE-A1- 102006 046 658
- GB-A- 365 530
- US-A- 4 898 741
- US-A1- 2011 111 088

## Description

### TECHNICAL FIELD

The invention pertains to the technical field of freezing and thawing food products and a climate chamber for performing the latter.

### BACKGROUND

Frozen food products are normally considered to be inferior to their fresh counterparts, because the freezing/thawing process results in quality loss of the food and undesired side-effects such as for instance dehydration and drip loss. This is true for fruit and meat, and especially for fish. The process of thawing and freezing is an intricate process, which should be carefully fine-tuned, depending on the nature and characteristics of the food product. In conventional prior art freezing methods, food temperature is from room temperature to the frozen state in a matter of hours, typically 1 to 3 hours. When such conventional methods are applied to high water content foods (i.e. seafood, sushi, surimi, seafood blocks, etc.), a substantial portion of the water in the food is irreversibly lost. The loss of water is caused by an accelerated aging process that takes place when the food is exposed to a certain temperature zone for a relatively long period of time during conventional freezing processes. Exposure to this accelerated aging temperature zone for prolonged periods of time also results in the generation of ice crystals at a high rate. As a result, ice crystals that form will expand in size with time and rupture the cell structure of the food being frozen. When the food is defrosted, water generated from the ice crystals will be irreversibly lost from the food. In an attempt to address shortcomings with conventional freezing techniques, it has been proposed to apply a magnetic field to the food during the freezing process. In this approach, according to U.S. Pat. No. 6,250,087, magnetic energy is applied to the food to be frozen in a conventional freezer to attempt to prevent cell fracture caused by ice crystal growth during the freezing process. The food is shaken by the application of the magnetic field to suppress crystallization. However, this approach uses conventional freezing technology and the process still takes a long time for complete freezing to take place (1 to 3 hours, depending of the temperature and product size). In general, conventional prior art food freezing methods have substantial drawbacks resulting from the substantial loss of moisture content, cell structure damage, thereby reducing freshness and changing the texture and desirability of the thawed food product.

There are several parallels in the process of frosting and defrosting food products, but in many aspects the defrosting is even more complicated than freezing. A high temperature difference between the product and the cooling medium can be an advantage during freezing, exemplified by the use of liquid nitrogen or carbonic acid in some applications. But excessive temperature differences should be avoided during defrosting. The degree of heat that flows into a product during defrosting should be just sufficient for the ice crystals to melt, without damaging the defrosted part when the isothermal melting line penetrates the products from outside and into the core. At the same time the process should be as fast as possible because otherwise enzymatic decomposition processes in the tissue are accelerated and the development of microorganisms encouraged. Today's defrosting technologies attempt to strike a balance between these contrasting requirements, but do not succeed entirely.

The least expensive, but also the least effective method is to defrost food products in the air. Because air has a low thermal conductivity the thawing rate is low. However, due to the long period of time spent in the air the product will lose moisture from the surface and dry out. Other thawing methods are based on the use of water for thawing. The spectrum of used methods ranges from simple immersion tanks to continuously operating sprinkler systems which thaw the frozen products with heated water. There are also new kinds of defrosting technologies undergoing tests such as climate systems where water or steam is sprayed finely into the thawing chamber through jets. US 4 898 741 proposes a method for thawing deep-frozen food products based on the products being situated in a humid atmosphere by an air flow with a rate of speed of approximately 5 m/sec. It is specified that the humidity is maintained by mixing injecting water and by airflow with a specific temperature. This method has undesirable side effects such as a rather unattractive change of color of the food products. Although inexpensive and effective, the mix of vapor and air reduces the humidity and cause dehydration and color changes. Because of these problems and a lack of adequate freezing and thawing method for food products, these products are of lesser interest to the consumers. Hence they are sold at a lower price, making them less profitable for the producer.

The present invention aims to resolve at least some of the problems mentioned above. The current invention discloses a method for freezing whereby the entered quality of the food products at the time of freezing are retained. The invention applies particularly for fresh food products which are based on fish and shellfish but to a large extent also meat and particularly meat from poultry but also from cattle and game. With regards to the food products, the current invention particularly applies to food products with higher water content, and also applies to delicate vegetables like cucumbers and fruits such as berries.

### SUMMARY OF THE INVENTION

The present invention provides a method for freezing food products according to claim 1. After thawing, the previous fresh frozen food product will keep its original weight and still have equal sensorial parameters, such as color, consistency, texture, surface wetness, taste and flavor as when fresh. The current invention furthermore also omits the need of various branches of the food industry to handle cold stored, unfrozen food products, which is contributory to higher costs and prices. Moreover, by use of the current invention, one need not be concerned about transport distances, delays in the transport chain due to weather conditions or other uncontrollable external factors, as well as seasons. The current invention makes possible the presence of food products with fresh quality at any desired time and place.

For instance, whole fish and fish presentations do not normally have a smooth and even surface or shape, which by using the prior art defrosting technologies, some parts of the product might have different temperatures than the core of the product, again creating microorganism development concerns. The current invention delivers a consistent temperature throughout the product, which will help with maximizing yields and sustainability as fewer products will be sorted out and wasted from further processing, value adding and distribution.

In a first embodiment, said method comprises the step of placing the food products in a climate chamber with a controlled humid climate air flow and temperature, characterized in that the frozen food products are subjected to an aerosol comprising atomized water droplets. These atomized water droplets increase the speed of energy transformation between the product and the environment; prevent cellular damage of the product during both freezing and thawing, ensuring the fresh quality of the food product. The method prevents thus the formation of sharp ice crystals in the cellular compartments of the food product during freezing, which cause cellular damage. When food products are thawed by the current invention, evaporation of moisture from the cells, subsequent protein denaturation and drip loss is avoided. Preferably, said climate chamber comprises a relative humidity range of 95 to 100%. The latter range ensures an overall hydration of the product, without the risk of becoming too moist and hence affecting texture of the food product. Dehydration, an effect which is seen in the currently known freezing and thawing processes is completely abolished. Thaw exudate is eliminated and the original fresh qualities at the time of freezing of the product are preserved.

Said aerosol is preferably generated by an atomizer and comprises a piezoelectric actuator, preferably with a frequency range between 1.7 and 2.5 MHz. The atomized water droplets have a particle size of 0.1 to 10 µm, more preferably 1 to 5 µm. The particle size has been optimized in order to create an optimal heat carrier during the freezing process. The particle size allows the aerosol to be cooled down to very low temperatures, without the formation of unwanted ice crystals which are detrimental to the cells of the food product. The use of atomized water droplets in the disclosed range of the current invention will hence cause negligible cellular damage of the food products during freezing. The products will keep their input condition. Moreover, the process of freezing and thawing will be considerably faster than the currently known freezing/thawing methods, without the loss of quality which is usually seen when using conventional processes. If the product is not frozen quickly enough, or if stored under fluctuating temperatures or improperly thawed, sharp ice crystals form and penetrate the cell walls and membranes causing cell and tissue fluids to escape during thawing. This is called drip loss. When the food product is for instance fish, it can account for 3 to 5% of net fish mass and represents a considerable economic loss. Although fast thawing helps maintain the natural properties of the fish, the tissues have less time to reabsorb the drip loss. Reabsorption of cell and tissue fluid is a slow process which takes several hours. Simply slowing down the defrosting time does not offer an alternative because this normally leads to increased microorganism activities and surface dehydration causing damages in flavor, color and texture. During the thawing process heat has to flow through the already thawed outer body layers into the center which is still frozen. The outer layers of the food product quickly reach temperatures at which bacteria can flourish and enzymes are active. Excessive or poorly controlled defrosting can cause the activity of enzymatic and chemical spoilage processes increase. The tissues go soft and limp. The surface dries out and the product's natural color, aroma and flavor properties are degraded.

Preferably, the optimal temperature, humidity and freezing time is determined based on the nature and characteristics of said food product. In a more preferred embodiment, the temperature of the climate chamber is correlated to the core temperature of said food product. By optimizing the latter for each product, near perfect conditions are created in order to optimally preserve the fresh input condition of the food products. Optimization will further ensure faster freezing processes, especially when compared to the currently known processes. More preferably, the temperature will be gradually decreased during said freezing of food products. The latter will ensure that the fresh quality of the food products is preserved during the freezing process, as well as further prevent any cellular damage which might occur during the process.

In another embodiment, additives can be added to the aerosol. As such, additional characteristics, such as flavors, colors, etc. can be easily added to the food products, without the need of a subsequent and often complicated processing step, hence gaining time and money.

### DETAILED DESCRIPTION OF THE INVENTION

The object of the present invention concerns a method for freezing food products, such as fish, meat, vegetables or fruit, whereby the food product after thawing has not lost its inherent entered fresh qualities. The method furthermore allows elimination of restrictions and bottle necks usually seen with harvesting, handling, transporting and vending food products. Normal limitations such as distance, seasons and unforeseen events causing deterioration of the food quality are eliminated, when utilizing the method according to the current invention. In a further aspect the current invention equally relates to the apparatus for performing the method of the invention.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise," "comprising," and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The recitation of numerical ranges by endpoints includes all numbers and fractions subsumed within that range, as well as the recited endpoints.

The expression "% by weight" (weight percent), here and throughout the description unless otherwise defined, refers to the relative weight of the respective component based on the overall weight of the formulation.

Described herein is a method for freezing food products . In an embodiment, the method comprises placing the food products in a climate chamber with a controlled humid climate air flow and temperature, characterized in that the frozen food products are subjected to an aerosol comprising atomized water droplets.

As used herein, the term 'aerosol' is to be understood as a gaseous suspension of fine solid or liquid particles or droplets. In a preferred embodiment, said aerosol is a gaseous suspension of liquid particles or droplets. The term 'atomized' droplets is to be understood as particles or droplets of the aerosol which have a diameter smaller than 100 µm.

The relative humidity range in the climate chamber will be highly dependent on the nature of the food product to be frozen or thawed, but preferably, the climate chamber will comprise a relative humidity range of 90 to 100%, more preferably between 95% and 99%. In spite of this extreme humidity, the created aerosol or mist will feel dry and can be best described as 'dry water'.

According to the invention, the atomized water droplets have a particle size range between 0.1 and 10 µm. In a more preferred embodiment, said particle size ranges from 1 to 5 µm. The term particle size is to be understood as the diameter of the generated particles or droplets of the aerosol, in the ideal situation where said particles or droplets are spherical. Devices which generate atomized water droplets of a defined particle size are readily known in prior art. The relative humidity in the climate chamber reaches very high values in order to achieve equilibrium between the water-activity of the specific food product and the ambient air-humidity. The particle size, combined with the preferred relative humidity range of the generated aerosol ensures optimal heat and temperature carrier characteristics of the aerosol. By use of the current method, freezing of food products is more effective, especially compared to other freezing methods. Due to its purity and specific particle size of the microscopic water droplets, the aerosol is cooled to -40°C without turning into aggregated snow crystals. When injected into a cold blast freezing tunnel, freezing time will be reduced by close to 20%, when compared to conventional freezing methods. It is desirable that freezing of food products occurs as quickly as possible, in order to preserve the quality of the entered food. Quick freezing prevents the aggregation of bigger ice crystals resulting in the formation of ice as small crystals in the product, which subsequently does not lead to damages of the muscle fibres, and also decreases the amount of protein denaturation. The use of a mist during freezing of food products, comprising atomized water particles according to the current invention, completely eliminates dehydration of the surface of the product, hence protecting appearance and market value.

The process according to the current invention has also been extremely beneficial in terms of preserving the quality of frozen food products during a thawing process. Normally during the latter, a dehydration process will take place, obviously negatively affecting the quality of the food. In general, due to the dehydration process in the cells of the food product an increase in salt concentration and thereof related protein denaturation is seen. As moisture evaporates from the cells during the thawing process, more moisture is drawn to the surface, hereby accumulating salts. The latter results in an increase in the ionic strength and a change in pH which adversely affects the protein stability in the cells. Maximum denaturation of water soluble protein occurs when the moisture content of the tissue is reduced to a value below 20 to 30%.

The use of the relative humidity range of the current invention, combined with the specific aerosol droplet environment during the thawing process allows reabsorption of cell and tissue fluids thus protecting against this osmosis process. Thaw exudate is eliminated and the original entered fresh qualities of the product are preserved. This differs from all previous thawing methods, which all lead inevitably to a certain degree of dehydration.

In a preferred embodiment, said aerosol is generated by an atomizer or nebulizer. Said atomizer is preferably an ultrasonic atomizer or nebulizer. More preferably, said atomizer comprises a piezoelectric actuator, preferably with a frequency range between 1.7 and 2.5 MHz. In detail, sound waves are produced by permanent changes in pressure, whereby the electrical energy is transformed into mechanical energy by the piezoelectric actuator. The latter ensures the generation of the aerosol with the preferred range of particle size of the atomized water particles.

In a preferred embodiment, the optimal temperature, humidity and freezing or thawing time will be determined based on the nature and characteristics of said food product. As defined by the current invention, the nature and characteristics of the food product is to be regarded as the sort of food product (e.g. fish, meat, fruit, vegetable,...) and its inherent features and physical appearances, as there is for instance fatty acid content, water content, sugar content, thickness, weight, dimension, etc. For instance, the thickness of the product is a parameter which has to be taken into account when setting up the freezing and thawing protocol. Other inherent characteristics of the food, such as water, sugars and fatty acid content, are equally of importance. In a more preferred embodiment of the current method, protocols comprising the preferred temperature/humidity and time tables are provided separately for each food product which can be frozen and thawed by the current method (see also examples).

In general, one can say that the fresh products should be frozen as soon as possible after harvesting or obtaining. For instance, for fish, this should be before, or at the latest at the time when the fish comes out of rigor mortis. For fruit, this will be right after harvesting.

The core temperature of the frozen food products should be between -10°C and - 60°C, more preferably between -18°C and -60°C, preferably between -15°C and - 25°C, more preferably -18°C. The latter will strongly depend on the desired application of the food products and the nature and the characteristics thereof. For instance, the frozen temperature should be lowered the longer the storage time and the higher fat content of the product. For example can fatty tuna keep its fresh sushi quality more than a year if it is kept in a frozen storage at -40/-60°C.

Humidity in the climate chamber preferably ranges from 90 to 100%, more preferably from 95% to 99%.

Preferably, the temperature in the climate chamber will be correlated to the core temperature of said food product and its desired final core temperature when being frozen.

When products are being frozen the temperature will be kept at its lowest, in order to freeze the product as fast as possible, preferably down to a core temperature between -15°C and -20°C or lower. The choice of core temperature will be depend on the nature of the food product and the prospected storage time. For instance, the core temperature should be lower than -30-40°C for fat fish which has to be stored over a long period of time. This knowledge about temperature optimization related to fatness and storage time are well known.

Thus, in a preferred embodiment, the temperature of the climate chamber is correlated to the core temperature of said food product.

In one embodiment, a temperature sensor is provided, connected to the inside of the food product to monitor the core temperature of food products. In another embodiment, temperature sensors are equally provided to the climate chamber measure the temperature of the chamber. These temperature sensors are preferably connected to a control unit so that the interior and the core food temperatures can be monitored and controlled. In another embodiment, the process may be standardized by practicing tested models without measuring each processed product or production batch.

In a further step of the method, the food product can be provided with additional characteristics when being frozen according to the current method. The latter is achieved through addition of additives to the aerosol. Additives can for instance comprise extra flavour compounds, colouring compounds, marinades etc. which can be transferred to the products through the aerosol droplets, hence giving the food product an extra characteristic.

The food products frozen according to the method of the invention are fish, fruit, vegetables or meat. In a preferred embodiment, said food product, when frozen by the current method has kept up the input quality before freezing.

The wording 'input quality' is to be defined as the sum of the sensorial parameters of a food product such as colour, consistency, texture, surface wetness, water content taste, flavour and appearance. Preferably, the input quality (prior to freezing) of the food product will equal the output quality (quality right after thawing) if product-specific optimal storage conditions regarding stable low temperatures are applied. There will be no perceivable loss of quality between these two stages (under the strict condition that the optimal storage requirements are met) contrary to conventional freezing methods. Parameters can be checked visually, or with the appropriate measuring devices.

As defined herein, drip loss is to be understood as the loss in weight of food products owing to extruding and dripping away of tissue juices. Said the amount of drip loss is determined by measuring the weight difference between the food product in frozen status and the thawed food product. In the preferred embodiment, the food product will comprise fish. Said fish is to be understood as an aquatic animal, vertebrate or invertebrate which is edible or derivatives of said aquatic animal. The latter can for instance include saltwater or freshwater members of the superclass of Pisces, shellfish, crustacean, jellyfish or squid. In a more preferred embodiment, said fish has been frozen prior to rigor mortis or just after when the fish comes out of rigor mortis. In another preferred embodiment, said food product is fruit or vegetables.

The latter, especially fruit, typically loses a certain amount of juice when being thawed by conventional methods. Commercial exploitation of such frozen and thawed fruits and vegetables poses a number of problems as the quality is generally seen as inferior. The inventors has found a way of increasing a product shelf life which consists of freezing and thawing the fruit, either whole or prepared, such that when thawed no functional damage occurs to the cellular membranes, in particular the plasmalemma and vacuolar membranes. On freezing by the current invention cell integrity is retained, as well as the overall quality (visual aspects, consistency, turgor,...) of the fruit and vegetables.

Described herein is a climate chamber for freezing food products, comprising at least one section for receiving food products, means for sensing the temperature in said climate chamber, a protocol menu allowing an operator to chose the desired protocol based on the nature of said food product and an atomizer for providing an aerosol, characterized in that said atomizer generates an aerosol comprising a particle size between 0.1 and 10 µm. Said protocol menu is to be understood as an option menu, preferably with digital display, which allows the operator to indicate which food product is to be frozen and/or which protocol or settings are to be used.

Preferably, said atomizer is an ultrasonic atomizer. Due to their physical nature, sound waves consist of mechanical vibrations of compressible media. These vibrations occur due to a displacement of equilibrium of the particles of a compressible material. Due to their own mobility and gravitation these particles are periodically moving to and from their original position. Sound waves are tied to a medium and cannot exist in a vacuum.

Preferably, the generated electrical energy will be transformed into mechanical energy by a piezoelectric transducer. More preferably, said piezoelectric transducer has a frequency range between 1.7 and 2.5 MHz. The average droplet diameter depends on the surface tension and the density of the medium as well as on the excitation frequency. The higher the excitation frequency, the smaller the average droplet diameter. In a preferred embodiment, said piezoelectric transducer is installed to the bottom of a water reservoir within the climate chamber. Constant compression /decompression of the water column above the transformer causes cavitation in the immediate vicinity of the water surface. Crossed capillary waves are formed, from which very small mist droplets (aerosols) are cast off in the wave crest.

The latter will subsequently be discharged by airflow in the chamber, which results in a fast dilution with the ambient air. Preferably, the humid air is circulated by fans. Heating means are present in order to distribute hot or cold humid air. In a most preferred embodiment, humidity of this flow is controlled by a humidistat.

In a preferred embodiment, said climate chamber is a stationary system. In another preferred embodiment, said climate chamber is a continuous system. Preferably, the temperature in said climate chamber will range from -60°C to +40°C, depending on the application (thawing or freezing) and the characteristics of the food products to be processed. In an embodiment, said climate chamber is part of a larger system or unit, comprising automatic delivery means of the frozen food products (such as a conveyor) which enter the climate chamber, and which, upon thawing, are transported further to for instance a packaging or distribution unit. The latter ensures an automated system for thawing and distributing frozen food products.

Preferably, the water used in the atomization process is purified and re-used. In a more preferred embodiment, said purification occurs by use of a reverse osmosis process performed by reverse osmosis devices. The latter ensures that the ultrasonic ceramic membranes are well-maintained, eliminate salts and impurities from the used water and prevent contamination of the food products. Furthermore, these savings in energy and water consumption contribute significantly to the need of reducing the carbon footprint of the food processing industry.

## Claims

1. A method for freezing food products, said food products being chosen from the group of fish, fruit, vegetables or meat, comprising placing the food products in a climate chamber with a controlled humid climate, air flow and temperature, **characterized in that** the food products are subjected to an aerosol comprising atomized water droplets having a particle size of 0.1 to 10 µm and wherein the aerosol is cooled to -40°C without turning to aggregated snow crystals.

2. Method according to claim 1, wherein the food products have a core temperature of between -10°C and -60°C after freezing.

3. A method for freezing food products according to claim 1 or 2, whereby said climate chamber comprises a relative humidity range of 90 to 100%.

4. A method for freezing food products according to any of the previous claims , wherein said aerosol is generated by an atomizer.

5. A method for freezing food products according to claim 4, whereby said atomizer comprises a piezoelectric actuator, preferably with a frequency range between 1.7 and 2.5 MHz.

6. A method for freezing food products according to any of the claims 1 to 5, whereby said atomized water droplets have a particle size of 1 to 5 µm.

7. A method for freezing food products according to any of the claims 1 to 6, whereby the optimal temperature, humidity and freezing time is determined based on the nature and characteristics of said food product.

8. A method for freezing food products according to any of the claims 1 to 7, whereby the temperature of the climate chamber is correlated to the core temperature of said food product.

9. A method for freezing food products according to any of the claims 1 to 8, adding additives to said aerosol.

## Patentansprüche

1. Verfahren zum Tiefkühlen von Lebensmittelprodukten, wobei die Lebensmittelprodukte aus der Gruppe von Fisch, Obst, Gemüse oder Fleisch ausgewählt sind, umfassend das Platzieren der Lebensmittelprodukte in einer Klimakammer mit gesteuertem feuchtem Klima, gesteuertem Luftstrom und gesteuerter Temperatur, **dadurch gekennzeichnet, dass** die Lebensmittelprodukte einem Aerosol ausgesetzt werden, das vernebelte Wassertröpfchen mit einer Partikelgröße von 0,1 bis 10 µm umfasst, und wobei das Aerosol auf -40°C gekühlt wird, ohne sich in aggregierte Schneekristalle zu verwandeln.

2. Verfahren nach Anspruch 1, wobei die Lebensmittelprodukte nach dem Tiefkühlen eine Kerntemperatur zwischen -10°C und -60°C aufweisen.

3. Verfahren zum Tiefkühlen von Lebensmittelprodukten nach Anspruch 1 oder 2, wobei die Klimakammer einen Bereich relativer Luftfeuchte von 90 bis 100% umfasst.

4. Verfahren zum Tiefkühlen von Lebensmittelprodukten nach einem der vorhergehenden Ansprüche, wobei das Aerosol durch einen Vernebler erzeugt wird.

5. Verfahren zum Tiefkühlen von Lebensmittelprodukten nach Anspruch 4, wobei der Vernebler ein piezoelektrisches Betätigungselement umfasst, vorzugsweise mit einem Frequenzbereich zwischen 1,7 und 2,5 MHz.

6. Verfahren zum Tiefkühlen von Lebensmittelprodukten nach einem der Ansprüche 1 bis 5, wobei die vernebelten Wassertröpfchen eine Partikelgröße von 1 bis 5 µm aufweisen.

7. Verfahren zum Tiefkühlen von Lebensmittelprodukten nach einem der Ansprüche 1 bis 6, wobei die optimale Temperatur, Luftfeuchte und Tiefkühlzeit basierend auf der Art und den Eigenschaften des Lebensmittelprodukts bestimmt werden.

8. Verfahren zum Tiefkühlen von Lebensmittelprodukten nach einem der Ansprüche 1 bis 7, wobei die Temperatur der Klimakammer mit der Kerntemperatur des Lebensmittelprodukts in Beziehung steht.

9. Verfahren zum Tiefkühlen von Lebensmittelprodukten nach einem der Ansprüche 1 bis 8, Hinzufügen von Additiven zum Aerosol.

## Revendications

1. Procédé de congélation de produits alimentaires, lesdits produits alimentaires étant choisis dans le groupe constitué par le poisson, les fruits, les légumes ou la viande, comprenant le placement des produits alimentaires dans une chambre climatique avec un climat humide, un débit d'air et une température contrôlés, **caractérisé en ce que** les produits alimentaires sont soumis à un aérosol comprenant des gouttelettes d'eau atomisées ayant une taille de particule de 0,1 à 10 µm et dans lequel l'aérosol est refroidi à -40°C sans se transformer en cristaux de neige agrégés.

2. Procédé selon la revendication 1, dans lequel les produits alimentaires ont une température à cœur comprise entre -10°C et -60 C après congélation.

3. Procédé de congélation de produits alimentaires selon la revendication 1 ou 2, dans lequel ladite chambre climatique comprend une plage d'humidité relative de 90 à 100%.

4. Procédé de congélation de produits alimentaires selon l'une quelconque des revendications précédentes, dans lequel ledit aérosol est généré par un atomiseur.

5. Procédé de congélation de produits alimentaires selon la revendication 4, dans lequel ledit atomiseur comprend un actionneur piézoélectrique, de préférence avec une gamme de fréquences comprise entre 1,7 et 2,5MHz.

6. Procédé de congélation de produits alimentaires selon l'une quelconque des revendications 1 à 5, dans lequel lesdites gouttelettes d'eau atomisées ont une taille de particule de 1 à 5 µm.

7. Procédé de congélation de produits alimentaires selon l'une quelconque des revendications 1 à 6, dans lequel la température, l'humidité et le temps de congélation optimaux sont déterminés sur la base de la nature et des caractéristiques dudit produit alimentaire.

8. Procédé de congélation de produits alimentaires selon l'une quelconque des revendications 1 à 7, dans lequel la température de la chambre climatique est corrélée à la température à cœur dudit produit alimentaire.

9. Procédé de congélation de produits alimentaires selon l'une quelconque des revendications 1 à 8, comprenant l'ajout d'additifs audit aérosol.
